# EUROPÄISCHE PATENTSCHRIFT

(11) **EP 2 027 765 B1**
(45) Veröffentlichungstag und Bekanntmachung des Hinweises auf die Patenterteilung: **15.09.2010**
(21) Anmeldenummer: 08012804.4
(22) Anmeldetag: 16.07.2008
(51) Int. Cl.: A01F 29/22, B24B 3/36

(54) **Schleifvorrichtung für Häckselmesser an einer Trommel-Häckselmaschine**
Grinding device for cutter blade for a drum straw cutter
Ponceuse pour hache-paille sur un hache-paille à tambour

(30) Priorität: 24.08.2007 DE 102007040259
(43) Veröffentlichungstag der Anmeldung: 25.02.2009
(73) Patentinhaber: CLAAS Selbstfahrende Erntemaschinen GmbH, 33426 Harsewinkel (DE)
(72) Erfinder: Strieker, Norbert, 33415 Verl (DE); Reckermann, Michael, 48346 Ostbevern (DE); Hohlfeld, Markus, 48431 Rheine (DE); Dückinghaus, Heinz, 33649 Bielefeld (DE)
(74) Vertreter: Heuer, Wilhelm

(56) Entgegenhaltungen:
- WO-A-99/32388
- DE-A1- 4 128 483
- DE-A1- 4 320 353

## Beschreibung

Die vorliegende Erfindung betrifft eine Vorrichtung zum Schleifen der Häckselmesser an einer Trommel-Häckselmaschine, wie z.B. aus DE 41 28 483 C2 bekannt.

Diese herkömmliche Schleifvorrichtung umfasst einen doppelt wirkenden Zylinder, durch den ein Schleifschlitten in alternierende Richtungen antreibbar ist. Ein von dem Schleifschlitten getragener Schleifstein bewegt sich dadurch parallel zur Achse der Häckseltrommel über deren rotierende Messer hinweg und schleift diese.

Um eine Richtungsumkehr des Schleifschlittens zu steuern, muss eine der zwei Kammern des doppelt wirkenden Zylinders, die zuvor mit einer Druckquelle verbunden ist, mit einer Drucksenke verbunden werden, und umgekehrt muss die zuvor mit der Drucksenke verbundene Kammer mit der Druckquelle verbunden werden. Um den Schleifschlitten zwischen zwei Schleifvorgängen zu fixieren, käme in Betracht, wenigstens eine der Kammern des Zylinders dicht zu verschließen, so dass sich deren Volumen nicht ändern kann. Dies erfordert aufwändige, zwischen einer Vielzahl von Zuständen umschaltbare Ventile. Alternativ könnten auch vom Hydrauliksystem getrennte Mittel zum Fixieren des Schleifschlittens vorgesehen werden, doch verkomplizieren auch diese den Aufbau der Schleifvorrichtung und erhöhen deren Kosten.

Aufgabe der vorliegenden Erfindung ist, eine Schleifvorrichtung für Häckselmesser an einer Trommel-Häckselmaschine zu schaffen, die eine Steuerung der Bewegung eines Schleifschlittens sowie gegebenenfalls eine Fixierung desselben mit einfachen, preiswert realisierbaren Mitteln ermöglicht.

Die Aufgabe wird gelöst, indem bei einer Vorrichtung zum Schleifen der Häckselmesser an einer Trommel-Häckselmaschine mit einem doppelt wirkenden Zylinder und einem durch den Zylinder in alternierende Richtungen angetriebenen Schleifschlitten zwei Kammern des Zylinders jeweils unterschiedliche große Kolbenflächen aufweisen, wobei die Kammer mit der kleineren Kolbenfläche an eine Druckquelle fest angeschlossen ist und die Kammer mit der größeren Kolbenfläche zwischen einem an die Druckquelle angeschlossenen Zustand und einem an eine Drucksenke angeschlossenen Zustand umschaltbar ist.

Im an die Druckquelle angeschlossenen Zustand ist die auf die größere Kolbenfläche wirkende Kraft größer als die auf die kleinere Kolbenfläche wirkende, auch wenn in beiden Kammern derselbe Druck herrscht. So wird, wenn beide Kammern mit der Druckquelle verbunden sind, der Schleifschlitten in Richtung einer Verkleinerung der Kammer mit der kleineren Kolbenfläche angetrieben. Umgekehrt vergrößert sich die Kammer mit der kleineren Kolbenfläche, wenn die Kammer mit der größeren Kolbenfläche an die Drucksenke angeschlossen ist. Wenn der Schleifschlitten eine Anschlagposition erreicht hat, so ist er in dieser so lange fixiert, wie der Druck der Druckquelle bestehen bleibt und der Anschlusszustand der Kammer mit der größeren Kolbenfläche nicht verändert wird. Um die Bewegung des Schleifschlittens zu steuern, genügt es daher, wenn der Anschlusszustand der Kammer mit der größeren Kolbenfläche umschaltbar ist; an der Kammer mit der kleineren Kolbenfläche werden keinerlei Schaltmittel benötigt.

Vorzugsweise ist zwischen der Druckquelle, der Drucksenke und der die größere Kolbenfläche aufweisenden Kammer des Zylinders ein einfaches 3/2-Wegeventil vorgesehen.

An einer die kleinere Kolbenfläche aufweisenden Kammer mit der Druckquelle verbindenden ersten Leitung ist zweckmäßigerweise eine erste Drosselstelle gebildet. Aufgrund der unterschiedlichen Kolbenflächen ist der Vortrieb des Schleifschlittens, der sich aus der Beaufschlagung der zwei Kammern mit einer gegebenen Menge an Hydraulikfluid ergibt, bei der Kammer mit der kleineren Kolbenfläche größer als bei derjenigen mit der größeren Kolbenfläche. Die Drosselstelle kann daher insbesondere dazu dienen, den Durchsatz in die Kammer mit der kleineren Kolbenfläche so zu begrenzen, dass sich für beide Bewegungsrichtungen des Schleifschlittens gleiche Geschwindigkeiten einstellen.

Ein Rückschlagventil ist zweckmäßigerweise in der ersten Leitung parallel zu der ersten Drosselstelle angeordnet, damit die erste Drosselstelle nicht in beide Richtungen durchsatzbegrenzend wirkt.

Mit Hilfe eines Drucksensors, der in der ersten Leitung zwischen der Drosselstelle und der die kleinere Kolbenfläche aufweisenden Kammer angeordnet ist, kann erfasst werden, wann der Schleifschlitten eine seiner zwei Anschlagstellungen erreicht: während sich der Kolben bewegt, tritt an der ersten Drosselstelle ein Druckabfall auf, so dass der von dem Drucksensor erfasste Druck um diesen Druckabfall kleiner ist als der Ausgangsdruck der Druckquelle. Wenn jedoch der Schleifschlitten eine Anschlagstellung erreicht, in der kein Hydraulikfluid mehr in die Kammer mit der kleineren Kolbenfläche zuströmen kann, verschwindet dieser Druckabfall und der von dem Sensor erfasste Druck wird gleich dem Ausgangsdruck der Druckquelle.

Eine zweite Drosselstelle kann an einer zweiten Leitung vorgesehen sein, die die Kammer mit der größeren Kolbenfläche mit der Druckquelle verbindet. Auch diese Drosselstelle kann zur Anpassung der Geschwindigkeit des Schleifschlittens bei Bewegungen in entgegengesetzte Richtungen dienen.

Zweckmäßigerweise ist diese zweite Drosselstelle an der zweiten Leitung zwischen der Druckwelle und dem Wegeventil angeordnet, so dass über das Wegeventil zur Senke abfließendes Druckfluid die zweite Drosselstelle nicht passieren muss.

Auch in der zweiten Leitung kann zwischen der Drosselstelle und der die größere Kolbenfläche aufweisenden Kammer ein Drucksensor angeordnet sein, um zu erfassen, wann der Schleifschlitten eine Endlage erreicht.

Eine Steuereinheit zum Empfangen des von dem Drucksensor erfassten Drucks und zum Umschalten des Wegeventils bei Erfassung eines Anstiegs des Drucks erlaubt es, automatisch eine Hin- und Herbewegung des Schleifschlittens zu steuern.

Als Alternative zu einem oder beiden oben erwähnten Drucksensoren kann jeweils ein Endlagenschalter vorgesehen sein, um zu erfassen, ob sich der Schleifschlitten in einer Endlage seiner Bahn befindet oder nicht, und die Steuereinheit ist ausgelegt, das Erfassungsergebnis des Endlagenschalters zu empfangen und bei Erfassung, dass der Schleifschlitten sich in einer Endlage befindet, das Wegeventil umzuschalten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen partiellen Schnitt durch einen Feldhäcksler, der mit einer erfindungsgemäßen Schleifvorrichtung ausgestattet ist;
- Fig. 2: ein Blockdiagramm der Schleifvorrichtung gemäß einer ersten Ausgestaltung;
- Fig. 3: ein zu Fig. analoges Blockdiagramm gemäß einer zweiten Ausgestaltung; und
- Fig. 4: ein zu Fig. 2 analoges Blockdiagramm gemäß einer dritten Ausgestaltung.

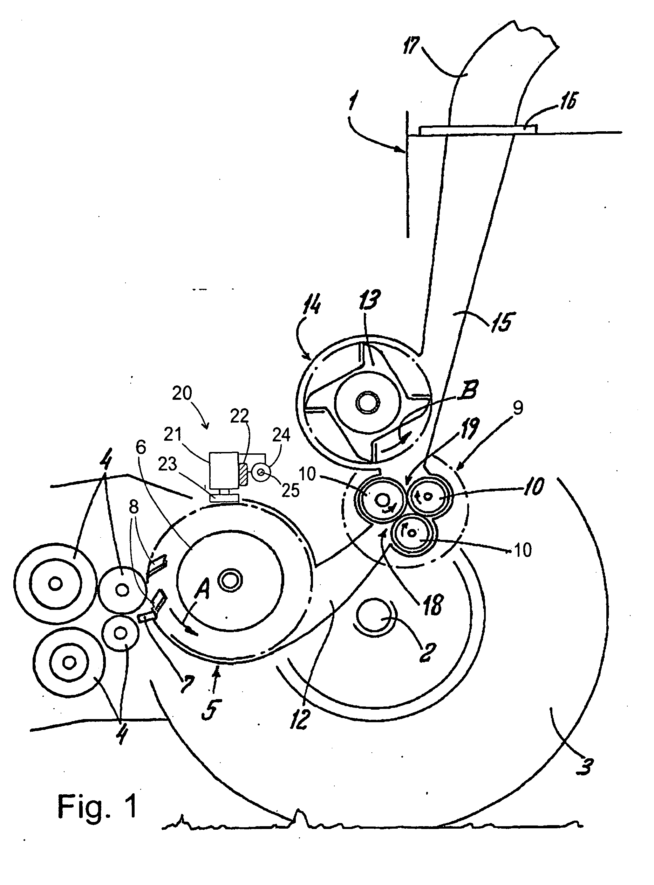

Der in Fig. 1 partiell dargestellte selbstfahrende Feldhäcksler 1 hat auf einer Vorderachse 2 gelagerte Laufräder 3. In Vorwärtsfahrtrichtung gesehen sind vor der Achse 2 nicht näher erläuterte Einzugsorgane 4 wie etwa ein Maisgebiss angeordnet. Zwischen den Einzugsorganen 4 und der Achse 2 ist eine Häckselvorrichtung 5 montiert, die im Wesentlichen aus einer rotierend antreibbaren Häckseltrommel 6 und einer feststehenden Gegenschneide 7 besteht. Gemäß der Darstellung in Fig. 1 wird die Häckseltrommel 6 entgegen dem Uhrzeigersinn in Pfeilrichtung A angetrieben, und am Umfang der rotierenden Häckseltrommel 6 verteilte Häckselmesser 8 überstreichen der Reihe nach die feststehende Gegenschneide 7, um das Erntegut zu zerkleinern.

Oberhalb der Achse 2 ist eine Konditioniereinrichtung 9 mit drei Konditionierwalzen 10 eingerichtet. Das gehäckselte Erntegut wird nacheinander durch zwei jeweils von einem Paar von gegenläufig drehangetriebenen Konditionierwalzen 10 gebildeten Konditionierspalten 18 bzw. 19 geführt, um das Erntegut weiter zu zerkleinern und darin enthaltene Körner anzuschlagen. Zwischen der Konditioniereinrichtung 9 und der Häckselvorrichtung 5 erstreckt sich ein Leitkanal 12. Oberhalb der Konditioniereinrichtung 9 liegt ein mit einem drehantreibbaren Rotor 13 ausgerüsteter Nachbeschleuniger 14. Der Rotor 13 wird in der Darstellung in Fig. 1 entgegen dem Uhrzeigersinn in Pfeilrichtung B angetrieben. Mittels des Nachbeschleunigers 14 wird das Häckselgut in einen Auswurfschacht 15 geschleudert, an dessen dem Nachbeschleuniger 14 abgewandt liegendem Ende ein Drehkranz 16 angesetzt ist, um einen andeutungsweise dargestellten Auswurfkrümmer 17 drehbar zu tragen.

Eine Schleifvorrichtung 20 zum Nachschleifen der Häckselmesser 8 an der rotierenden Häckseltrommel 6 ist am oberen Rand der Häckseltrommel 6 angeordnet. Die Schleifvorrichtung 20 umfasst einen Schlitten 21, der an einer sich in beide Richtungen des Feldhäckslers 1 erstreckenden Schiene 22 parallel zur Achse der Häckseltrommel 6 verschiebbar ist und an seiner Unterseite einen Schleifstein 23 trägt. Der Schleifstein 23 ist höhenverstellbar, um ihn mit einem jeweils benötigten Schleifdruck an die Häckselmesser 8 anstellen zu können und um im Laufe des Betriebs auftretenden Verschleiß der Häckselmesser 8 und des Schleifsteins 23 zu kompensieren.

Der Schlitten 21 ist entlang der Schiene 22 mit Hilfe eines doppelt wirkenden Zylinders 24 verschiebbar, von dem in dem Schnitt der Fig. 1 im Wesentlichen nur der äußere Mantel und eine Kolbenstange 25 sichtbar sind.

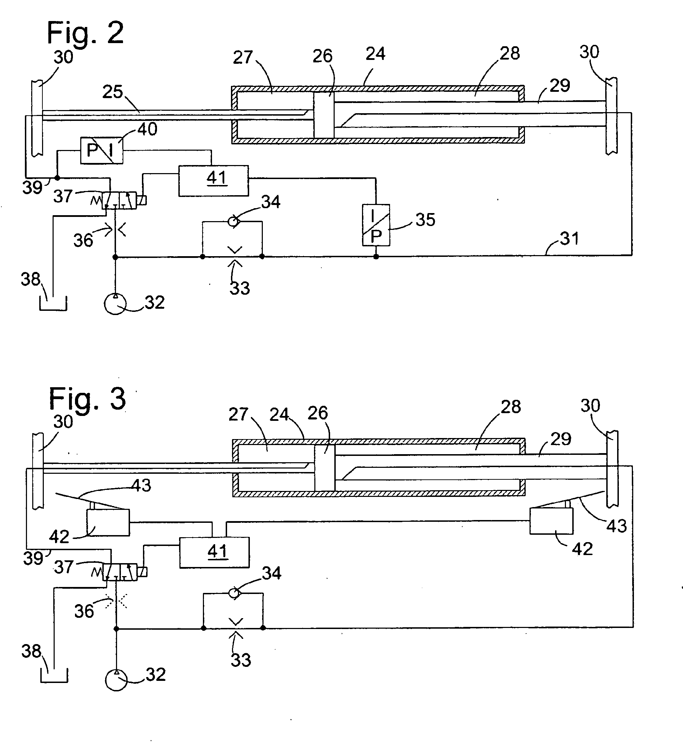

Fig. 2 ist ein Blockdiagramm, das detaillierter den Aufbau der Schleifvorrichtung 20 gemäß einer ersten Ausgestaltung zeigt. Der in Fig. 2 nicht dargestellte Schlitten 21 ist an dem Zylinder 24 befestigt; ein Kolben 26, der im Innern des Zylinders 24 zwei Kammern 27, 28 voneinander trennt, ist durch die Kolbenstange 25 und eine weitere Kolbenstange 29 mit entgegengesetzten Seitenwänden 30 der Häckselvorrichtung 5 verbunden. Die Kolbenstangen 25, 29 haben unterschiedliche Durchmesser, so dass die wirksamen Kolbenflächen des Kolbens 26 in den zwei Kammern 27, 28 unterschiedlich sind.

Die Kammer 28, die die kleinere Kolbenfläche der beiden Kammern 27, 28 aufweist, ist über eine sich teilweise innerhalb der Kolbenstange 29 erstreckende Leitung 31 mit einer Konstantdruckquelle 32 verbunden. In der Leitung 31 ist eine Drosselstelle 33 gebildet, und parallel zu der Drosselstelle 33 ist ein Rückschlagventil 34 in einer Orientierung angeordnet, in der das Druckfluid von der Kammer 28 zur Konstantdruckquelle 32 passieren kann, nicht aber in entgegengesetzter Richtung. Ein Drucksensor 35 ist mit der Leitung 31 zwischen der Kammer 28 und der Drosselstelle 33 verbunden.

Die Konstantdruckquelle 32 ist über eine weitere Drosselstelle 36 mit einem 3/2-Wegeventil 37 verbunden. In der in Fig. 2 gezeigten Stellung versperrt das Wegeventil 37 eine von der Konstantdruckquelle 32 kommende Leitung und verbindet eine sich teilweise im Inneren der Kolbenstange 25 erstreckende, von der Kammer 27 ausgehende Leitung mit einer Drucksenke 38. An einem sich zwischen der Kammer 27 und dem Wegeventil 37 erstreckenden Leitungsstück 39 ist ein weiterer Drucksensor 40 angeordnet. Beide Drucksensoren 35, 40 sind an eine Steuerschaltung 41 angeschlossen, die das Wegeventil 37 steuert.

In der in Fig. 2 gezeigten Konfiguration ist die Kammer 27 über das Wegeventil 37 mit der Drucksenke 38 verbunden, so dass in der Kammer 27 ein niedriger Druck herrscht, der als Null angenommen werden kann. Druckfluid von der Konstantdruckquelle 32 fließt daher über die Drosselstelle 33 und die Leitung 31 in die Kammer 28, so dass sich diese ausdehnt. Der Zylinder 24 und mit ihm der Schlitten 21 wird so in Richtung der rechten Seitenwand 30 verschoben. Der kontinuierliche Zustrom an Druckfluid zur Kammer 28 verursacht einen Druckabfall an der Drosselstelle 33, so dass der vom Sensor 35 erfasste Druck um eben diesen Druckabfall niedriger ist als der Ausgangsdruck der Konstantdruckquelle 32.

Wenn der Kolben 26 die linke Stirnwand des Zylinders 24 erreicht hat und das Volumen der Kammer 27 Null geworden ist, endet der Zustrom von Druckfluid zur Kammer 28, und der am Sensor 35 anliegende Druck wird gleich dem Ausgangsdruck der Konstantdruckquelle 32. Dieser Druckanstieg wird von der Steuerschaltung 41 erfasst, die daraufhin das Wegeventil 37 in seinen zweiten Zustand umschaltet. In diesem zweiten Zustand ist die Druckquelle 32 mit der Kammer 27 verbunden. Da diese eine größere Kolbenfläche aufweist als die Kammer 28, dehnt sich die Kammer 27 aus, der Zylinder 24 wird nach links verschoben, und aus der Kammer 28 wird Druckfluid verdrängt. Dieses Druckfluid fließt über das Rückschlagventil 34 in Richtung der Konstantdruckquelle 32. Der Drucksensor 35 ist somit fortlaufend dem Ausgangsdruck der Konstantdruckquelle 32 ausgesetzt. Der Zustrom von Druckfluid zur Kammer 27 führt jedoch zu einem Druckabfall an der Drosselstelle 36, so dass der Drucksensor 40 einen niedrigeren Druck als den Ausgangsdruck der Konstantdruckquelle 32 erfasst. Wenn der Kolben 26 den entgegengesetzten Anschlag erreicht hat, steigt der Druck am Sensor 40 auf den Ausgangsdruck der Quelle 32 an, und die Steuerschaltung 41 schaltet, wenn sie dies registriert, erneut das Wegeventil 37 um. So wandert der Kolben 26 kontinuierlich hin und her, und der Schleifstein 23 schleift die Häckselmesser 8, während sich die Häckseltrommel 6 kontinuierlich weiter dreht.

Der Strömungswiderstand der Drosselstellen 33, 36 ist umgekehrt proportional zur Kolbenquerschnittsfläche der über sie versorgten Kammern 27 bzw. 28 festgelegt, so dass der Zylinder 24 für Bewegungen in entgegengesetzte Richtungen im Wesentlichen die gleiche Zeit benötigt.

Bei der in Fig. 3 gezeigten Ausgestaltung sind der doppelt wirkende Zylinder 24, seine Aufhängung im Feldhäcksler mittels der unterschiedlich starken Kolbenstangen 25, 29, das Wegeventil 37 und der Verlauf der Leitungen 31, 39 derselbe wie in Fig. 2 dargestellt. Anstatt mit Drucksensoren ist die Steuerschaltung 41 mit zwei Endlagenschaltern 42 ausgestaltet, deren Schaltfinger 43 angeordnet sind, um von dem Zylinder 24 oder dem Schlitten 21 berührt und betätigt zu werden, wenn der Zylinder 24 eine Anschlagstellung an eine der beiden Seitenwände 30 erreicht. Die Steuerschaltung 41 ist mit den Endlagenschaltern 42 verbunden, um immer dann, wenn einer der beiden Endlagenschalter 42 von dem Zylinder 24 betätigt wird, eine Zustandsänderung des Wegeventils 37 zu steuern. So findet in analoger Weise wie bereits in Bezug auf Fig. 2 beschrieben jedes Mal bei Erreichen der Endlage ein Richtungswechsel des Zylinders 24 statt.

Anstelle eines mechanischen Schalters 42, der den Zylinder 24 durch Kontakt des Zylinders 24 mit dem Schaltfinger 43 erfasst, kann auch ein berührungslos erfassender Schalter, wie etwa eine Lichtschranke, eine Hall-Sonde oder dergleichen vorgesehen werden.

Die Drosselstelle 36, die in Figur 2 zwischen der Konstantdruckquelle 32 und dem Wegeventil 37 gezeigt ist, kann in der Ausgestaltung der Fig. 3 fehlen, denn da die Endlage des Zylinders 24 mit Hilfe der Schalter 42 erfasst wird, ist auf dem Leitungsstück 39 kein Druckabfall erforderlich, um das Erreichen der Endlage nachweisen zu können.

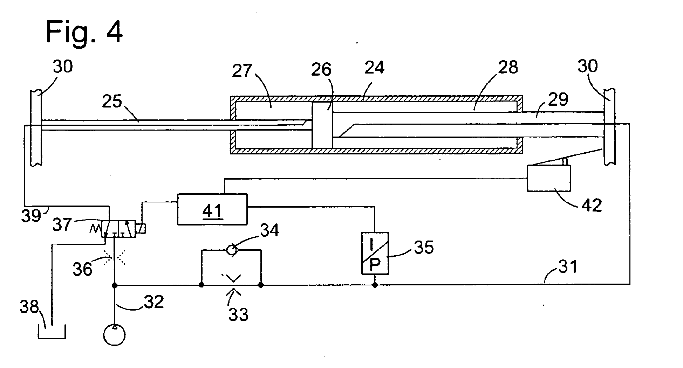

Wie Fig. 4 exemplarisch zeigt, können auch die unterschiedlichen Ansätze zum Erfassen der Endlage des Zylinders 24 der Fig. 2 bzw. der Fig. 3 miteinander kombiniert werden. So zeigt Fig. 4 einen Aufbau, in welchem mit Hilfe des Drucksensors 35 an der Leitung 31 erfasst wird, wann die Kammer 28 ihre maximal mögliche Ausdehnung erreicht hat, während der Zustand maximaler Ausdehnung der Kammer 27 durch die Betätigung eines Schaltkontakts in einem Endlagenschalter 42 erfasst wird.

Abweichend von den oben beschriebenen Ausführungsbeispielen kommt auch eine Konstruktion der Schleifvorrichtung in Betracht, bei der der Zylinder 24 in dem Feldhäcksler 1 ortsfest montiert ist, die beiden Kolbenstangen 25, 29 beweglich sind und wenigstens eine von ihnen den Schleifstein 23 antreibt. Die Steuerung der Richtungsumkehr erfolgt hier in derselben Weise wie oben mit Bezug auf Fig. 2 beschrieben durch Erfasssen eines Drucksprungs in einer der Leitungen 31, 39, oder durch Erfassen eines an einer der Kolbenstangen angebrachten Elements mit Hilfe der Schalter 42.

### Bezugszeichen

- 1: Feldhäcksler
- 2: Achse
- 3: Rad
- 4: Einzugsorgan
- 5: Häckselvorrichtung
- 6: Häckseltrommel
- 7: Gegenschneider
- 8: Häckselmesser
- 9: Konditioniereinrichtung
- 10: Konditionierwalze
- 11:
- 12: Leitkanal
- 13: Rotor
- 14: Nachbeschleuniger
- 15: Auswurfschacht
- 16: Drehkranz
- 17: Auswurfkrümmer
- 18: Konditionierspalt
- 19: Konditionierspalt
- 20: Schleifvorrichtung
- 21: Schlitten
- 22: Schiene
- 23: Schleifstein
- 24: Zylinder
- 25: Kolbenstange
- 26: Kolben
- 27: Kammer
- 28: Kammer
- 29: Kolbenstange
- 30: Seitenwand
- 31: Leitung
- 32: Konstantdruckquelle
- 33: Drosselstelle
- 34: Rückschlagventil
- 35: Drucksensor
- 36: Drosselstelle
- 37: Wegeventil
- 38: Drucksenke
- 39: Leitungsstück
- 40: Drucksensor
- 41: Steuerschaltung
- 42: Endlagenschalter
- 43: Schaltfinger

## Patentansprüche

1. Vorrichtung (24-42) zum Schleifen der Häckselmesser (8) an einer Trommel-Häckselmaschine (1), mit einem doppelt wirkenden Zylinder (24) und einem durch den Zylinder (24) in alternierende Richtungen angetriebenen Schleifschlitten (21), **dadurch gekennzeichnet, dass** zwei Kammern (27, 28) des Zylinders (24) zwei unterschiedlich große Kolbenflächen aufweisen, wobei die Kammer (28) mit der kleineren Kolbenfläche an eine Druckquelle (32) fest angeschlossen ist und die Kammer (27) mit der größeren Kolbenfläche zwischen einem an die Druckquelle (32) angeschlossenen Zustand und einem an eine Drucksenke (38) angeschlossenen Zustand umschaltbar ist.

2. Vorrichtung nach Anspruch 1, **dadurch gekennzeichnet, dass** ein 3/2-Wegeventil (37) mit der Druckquelle (32), der Drucksenke (38) und der die größere Kolbenfläche aufweisenden Kammer (27) des Zylinders (24) verbunden ist.

3. Vorrichtung nach Anspruch 1 oder 2, **dadurch gekennzeichnet, dass** an einer die kleinere Kolbenfläche aufweisenden Kammer (28) mit der Druckquelle (32) verbindenden ersten Leitung (31) eine erste Drosselstelle (33) gebildet ist.

4. Vorrichtung nach Anspruch 3, **dadurch gekennzeichnet, dass** ein Rückschlagventil (34) in der ersten Leitung (31) parallel zu der ersten Drosselstelle (33) angeordnet ist.

5. Vorrichtung nach Anspruch 3 oder 4, **dadurch gekennzeichnet, dass** ein Drucksensor (35) in der ersten Leitung (31) zwischen der ersten Drosselstelle (33) und der die kleinere Kolbenfläche aufweisenden Kammer (27) angeordnet ist.

6. Vorrichtung nach einem der vorhergehenden Ansprüche, **dadurch gekennzeichnet, dass** an einer die die größere Kolbenfläche aufweisende Kammer (28) mit der Druckquelle (32) verbindenden zweiten Leitung (39) eine zweite Drosselstelle (36) gebildet ist.

7. Vorrichtung nach Anspruch 6 und Anspruch 2, **dadurch gekennzeichnet, dass** die zweite Drosselstelle (36) an der zweiten Leitung zwischen der Druckquelle (32) und dem Wegeventil (37) angeordnet ist.

8. Vorrichtung nach Anspruch 6 oder Anspruch 7, **dadurch gekennzeichnet, dass** ein Drucksensor (40) in der zweiten Leitung (39) zwischen der Drosselstelle (36) und der die größere Kolbenfläche aufweisenden Kammer (27) angeordnet ist.

9. Vorrichtung nach Anspruch 5 oder Anspruch 8, **gekennzeichnet durch** eine Steuereinheit (41) zum Empfangen des von dem Drucksensor (35, 40) erfassten Drucks und zum Umschalten des Wegeventils (37) bei Erfassung eines Anstiegs des Drucks.

10. Vorrichtung nach einem der vorhergehenden Ansprüche, **gekennzeichnet durch** wenigstens einen Endlagenschalter (42) zum Erfassen, ob sich der Schleifschlitten (21) in einer Endlage seiner Bahn befindet oder nicht, und eine Steuereinheit (41) zum Empfangen des Erfassungsergebnisses des Endlagenschalters (42) und zum Umschalten des Wegeventils (37) bei Erfassung, dass der Schleifschlitten (21) sich in einer Endlage seiner Bahn befindet.

## Claims

1. Device (24-42) for grinding the chopping blades (8) in a rotary chopping machine (1), comprising a double-action cylinder (24) and a grinding carriage (21) driven by the cylinder (24) in alternating directions, **characterised in that** two chambers (27, 28) of the cylinder (24) have two different-sized piston surfaces, wherein the chamber (28) with the smaller piston surface is firmly connected to a pressure source (32) and the chamber (27) with the larger piston surface can be switched over between a state connected to the pressure source (32) and a state connected to a pressure sink (38).

2. Device according to claim 1, **characterised in that** a 3/2-port directional control valve (37) is connected to the pressure source (32), the pressure sink (38) and the chamber (27) of the cylinder (24) having the larger piston surface.

3. Device according to claim 1 or 2, **characterised in that** a first throttle point (33) is formed at a first line (31) connecting the chamber (28) having the smaller piston surface to the pressure source (32).

4. Device according to claim 3, **characterised in that** a non-return valve (34) is arranged in the first line (31) in parallel with the first throttle point (33).

5. Device according to claim 3 or 4, **characterised in that** a pressure sensor (35) is arranged in the first line (31) between the first throttle point (33) and the chamber (27) having the smaller piston surface.

6. Device according to one of the preceding claims, **characterised in that** a second throttle point (36) is formed at a second line (39) connecting the chamber (28) having the larger piston surface to the pressure source (32).

7. Device according to claim 6 and claim 2, **characterised in that** the second throttle point (36) is arranged at the second line between the pressure source (32) and the directional control valve (37).

8. Device according to claim 6 or claim 7, **characterised in that** a pressure sensor (40) is arranged in the second line (39) between the throttle point (36) and the chamber (27) having the larger piston surface.

9. Device according to claim 5 or claim 8, **characterised by** a control unit (41) for receiving the pressure detected by the pressure sensor (35, 40) and for switching the directional control valve (37) on detecting a rise in the pressure.

10. Device according to one of the preceding claims, **characterised by** at least one end position switch (42) for detecting whether the grinding carriage (21) is in an end position of the path thereof or not, and a control unit (41) for receiving the detection result of the end position switch (42) and for switching over the directional control valve (37) on detecting that the grinding carriage (21) is in an end position of the path thereof.

## Revendications

1. Dispositif (24-42) pour meuler les hachoirs (8) dans une machine à hacher rotative (1), comprenant un cylindre à double effet (24) et un chariot de meulage (21) entraîné par le cylindre (24) dans des directions alternées, **caractérisé en ce que** deux chambres (27, 28) du cylindre (24) ont deux surfaces de piston de tailles différentes, dans quoi la chambre (28) avec la surface de piston plus petite est fermement connectée à une source de pression (32) et la chambre (27) avec la surface de piston plus grande peut être commutée entre un état connecté à la source de pression (32) et un état connecté à un collecteur hydraulique (38).

2. Dispositif selon la revendication 1, **caractérisé en ce qu'**un distributeur à 3/2 orifices (37) est connecté à la source de pression (32), au collecteur hydraulique (38) et à la chambre (27) du cylindre (24) ayant la surface de piston plus grande.

3. Dispositif selon la revendication 1 ou 2, **caractérisé en ce qu'**un premier point d'étranglement (33) est formé au niveau d'une première ligne (31) connectant la chambre (28) ayant la surface de piston plus petite à la source de pression (32).

4. Dispositif selon la revendication 3, **caractérisé en ce qu'**un clapet anti-retour (34) est arrangé dans la première ligne (31) en parallèle avec le premier point d'étranglement (33).

5. Dispositif selon la revendication 3 ou 4, **caractérisé en ce qu'**un capteur de pression (35) est arrangé dans la première ligne (31) entre le premier point d'étranglement (33) et la chambre (27) ayant la surface de piston plus petite.

6. Dispositif selon l'une des revendications précédentes, **caractérisé en ce qu'**un deuxième point d'étranglement (36) est formé au niveau d'une deuxième ligne (39) connectant la chambre (28) ayant la surface de piston plus grande à la source de pression (32).

7. Dispositif selon la revendication 6 et la revendication 2, **caractérisé en ce que** le deuxième point d'étranglement (36) est arrangé au niveau de la deuxième ligne entre la source de pression (32) et le distributeur (37).

8. Dispositif selon la revendication 6 ou la revendication 7, **caractérisé en ce qu'**un capteur de pression (40) est arrangé dans la deuxième ligne (39) entre le point d'étranglement (36) et la chambre (27) ayant la surface de piston plus grande.

9. Dispositif selon la revendication 5 ou la revendication 8, **caractérisé par** une unité de contrôle (41) pour recevoir la pression détectée par le capteur de pression (35, 40) et pour commuter le distributeur (37) à la détection d'une hausse de la pression.

10. Dispositif selon l'une des revendications précédentes, **caractérisé par** au moins un fin de course (42) pour détecter si le chariot de meulage (21) est en fin de course de ce dernier ou non, et une unité de contrôle (41) pour recevoir le résultat de détection du fin de course (42) et pour commuter le distributeur (37) lorsqu'il est détecté que le chariot de meulage (21) est en fin de course de ce dernier.
